**Europäisches Patentamt**

**European Patent Office**

**Office européen des brevets**

(19)

(11) Veröffentlichungsnummer: **0 307 638**

**A1**

(12) # EUROPÄISCHE PATENTANMELDUNG

(21) Anmeldenummer: **88113299.7**

(22) Anmeldetag: **17.08.88**

(51) Int. Cl.⁴: **B23K 35/26**

(30) Priorität: **12.09.87 DE 3730764**

(43) Veröffentlichungstag der Anmeldung:
**22.03.89 Patentblatt 89/12**

(84) Benannte Vertragsstaaten:
**CH DE FR GB IT LI NL**

(71) Anmelder: **DEMETRON Gesellschaft für Elektronik-Werkstoffe m.b.H.**
**Leipziger Strasse 10**
**D-6450 Hanau 1(DE)**

Anmelder: **Degussa Aktiengesellschaft**
**Weissfrauenstrasse 9**
**D-6000 Frankfurt am Main 1(DE)**

(72) Erfinder: **Böhm, Wolfgang, Dr.**
**kronbergweg 2**
**D-8755 Alzenau/Albstadt(DE)**
Erfinder: **Langer, Adolf**
**In den Steinäckern 12**
**D-6458 Rodenbach I(DE)**
Erfinder: **Ptascheck, Georg, Dipl.-Ing.**
**Aussenliegend 93**
**D-6365 Rosbach(DE)**

(74) Vertreter: **Weber, Wolfgang**
**Degussa AG Fachbereich Patente**
**Rodenbacher Chaussee 4 Postfach 1345**
**D-6450 Hanau(DE)**

(54) **Verwendung von Legierungen aus Zinn und/oder Blei als Weichlote zum Aufbringen von Halbleitern auf metallische Träger.**

(57) Oxidschichtfreie Weichlote für das Aufbringen von Halbleitern auf metallische Träger erhält man, wenn man normalen Weichloten auf der Basis Blei und/oder Zinn, mit gegebenenfalls 0,5 bis 30 Gew.% Silber, 0,5 - 5 Gew.% Kupfer und/oder 0,5 - 18 Gew.% Antimon und/oder 0,5 bis 20 Gew.% Wismut, 0,0001 bis 0,1 Gew.% Phosphor und 0,002 bis 0,2 Gew.% Indium zusetzt.

EP 0 307 638 A1

# Verwendung von Legierungen aus Zinn und/oder Blei als Weichlote zum Aufbringen von Halbleitern auf metallische Träger

Die Erfindung betrifft die Verwendung von Legierungen aus Zinn und/oder Blei als Weichlote in Form von Formteilen oder Pasten zum Aufbringen von Halbleitern auf metallische Träger oder zum Löten oberflächenmontierter Bauelemente auf Leiterplatten.

Weichlote, wie sie in der Elektronik für verschiedene Zwecke angewendet werden, müssen eine gute Benetzung gewährleisten. Dabei sind Oxidhäute sowohl auf den zu verbindenden Flächen als auch auf den Lotformteilen hinderlich. Oxidschichten auf Oberflächen bei unedlen Werkstoffen sind bei Gegenwart von Luft nicht zu vermeiden. Auch Lotbänder, die besonders sauerstoffarm erschmolzen wurden, unterliegen, bedingt durch die notwendigen weiteren Verarbeitungsschritte, einer geringen oberflächlichen Oxidation. Besonders beim flußmittelfreien Löten sind diese Oxidhäute nachteilig, da die üblichen wasserstoffhaltigen Schutzgasatmosphären nur eine unvollständige Reduktion ermöglichen. Durch verschiedene Maßnahmen bei der Herstellung der an der Verbindung beteiligten Partner läßt sich die Dicke der Oberflächenoxidschicht minimieren, aber nicht ganz beseitigen. Dies wird auch deutlich durch die nach der Erstarrung des Lotes sichtbaren Anlauffarben. Der Lötvorgang wird im allgemeinen so geführt, daß diese Oxidschichten aufreißen und dadurch das Lötergebnis nicht beeinträchtigt wird. Durch den verstärkten Einsatz von schnellaufenden Die-Bond-Automaten besteht jedoch der Wunsch nach Loten, bei denen der negative Einfluß der Oxidhäute beim Löten weitestgehend beseitigt wird.

Aus der EP-OS 0 168 674 sind Zinnlote zum Schwallöten von gedruckten Schaltungen bekannt, bestehend aus Zinn, Blei, Antimon und 0,001 bis 0,015 Gew.% Phosphor. Die geringen Phosphormengen verhindern sehr stark die Ausbildung von Oxidschichten auf dem flüssigen Lotbad, verspröden allerdings auch die Lote im festen Zustand, so daß sich nur schwer Lotformteile aus solchen Legierungen herstellen lassen.

Es war daher Aufgabe der vorliegenden Erfindung, Legierungen auf der Basis Zinn und/oder Blei, gegebenenfalls mit Zusätzen von 0,5 bis 30 Gew.% Silber, 0,5 bis 5 Gew.% Kupfer und/oder 0,5 bis 18 Gew.% Antimon und/oder 0,5 bis 20 Gew.% Wismut zu entwickeln, als Weichlote in Form von Formteilen und Pasten zum Aufbringen von Halbleitern auf metallische Träger oder zum Löten oberflächenmontierter Bauelemente auf Leiterplatten und Keramik-Substrate, die sowohl im festen als auch im flüssigen Zustand keine Oxidhäute ausbilden und genügend duktil für die Herstellung von Formteilen sind.

Diese Aufgabe wird erfindungsgemäß gelöst durch die Verwendung von Legierungen aus 0,0001 bis 0,1 Gew.% Phosphor, 0,002 bis 0,2 Gew.% Indium, gegebenenfalls 0,5 bis 30 Gew.% Silber und/oder 0,5 bis 5 Gew.% Kupfer und/oder 0,5 bis 18 Gew.% Antimon, und/oder 0,5 bis 20 Gew.% Wismut, Rest jedoch mehr als 50 Gew.% Zinn und/oder Blei.

Es hat sich überraschenderweise gezeigt, daß durch geringe Zusätze an Phosphor und Indium eine Oxidhautbildung im festen als auch im flüssigen Zustand weitestgehend vermieden wird und die Legierungen durch den Indiumzusatz genügend duktil bleiben, um problemlos Formkörper aus diesen Legierungen durch Kaltverformung herstellen zu können. Die Lote zeigen keine oberfläche Verfärbung durch Oxidation, weniger Poren in der Lotschicht, einen besseren thermischen Wärmedurchgang und eine höhere thermische Zyklenfestigkeit als die bekannten Lote. Beim Löten erfolgt ein gutes und kontrolliertes Benetzen und Ausbreiten des flüssigen Lotes.

Bei folgenden Lotlegierungen hat sich der Zusatz von Phosphor und Indium in den angegebenen Mengen als besonders vorteilhaft erwiesen:

  a) 15 - 30 Gew.% Silber, 2 - 18 Gew.% Antimon, Rest Zinn
  b) 2 - 10 Gew.% Zinn, Rest Blei
  c) 0,5 - 7,5 Gew.% Silber, 0,5 - 7 Gew.% Antimon, Rest Blei
  d) 1 - 60 Gew.% Blei, Rest Zinn
  e) 0,5 - 10 Gew.% Silber, Rest Blei
  f) 0,5 - 5 Gew.% Kupfer, Rest Zinn
  g) 8 - 18 Gew.% Wismut, 35-45 Gew.% Blei, Rest Zinn

Typische Lote haben die folgenden Zusammensetzung:

Sn Ag 25 Sb 10 In 0,05 P 0,001
Pb Sn 4 In 0,006 P 0,0004
Pb Ag 2,5 Sb 2,5 In 0,04 P 0,002
Sn Pb 40 In 0,1 P 0,01
Pb Ag 5 In 0,05 P 0,005
Sn Cu 1 In 0,1 Pb 0,05
Sn Pb 43 Bi 14 In 0,1 P 0,05

Diese Legierungen können sowohl in Form von Formteilen als auch in Form von Pasten verwendet werden.

Folgendes Beispiel soll die Vorteile der phosphor- und indiumhaltigen Lote beim Auflöten von Halbleitern auf Metallträger näher erläutern:

Das Löten von Leistungshalbleitern aus Silizium auf vernickelte Kupfer-Substrate erfolgt mit einem Lot SnAg(25)Sb(10), dem 100 ppm InP. zugesetzt waren. Das Lot wird als Band mit einer Stärke von 70 μm und einer Breite von 4 mm einem Die-Bonder zugeführt und auf den auf 400 °C erwärmten und mit Schutzgas umspülten Substraten abgelegt. Das Lot schmilzt ohne erkennbare oxidische Haut an der Oberfläche auf und benetzt porenfrei die Unterlagen. Dann wird der Halbleiter auf das Lot abgesetzt und verlötet. Nach dem Abkühlen unter Schutzgas sind die sichtbaren Lotoberflächen, wie z. B. Hohlkehlen, metallisch blank und ohne Anzeichen von Oxidation. Durch Ablösen des Halbleiters kann der Bindeanteil der Lotstelle geprüft werden. Bei richtiger Einstellung der Lötparameter kann eine porenfreie Lötstelle erzielt werden.

## Ansprüche

Verwendung von Legierungen aus 0,0001 bis 0,1 Gew.% Phosphor, 0,002 bis 0,2 Gew.% Indium, gegebenenfalls 0,5 bis 30 Gew.% Silber und/oder 0,5 bis 5 Gew.% Kupfer und/oder 0,5 bis 18 Gew.% Antimon und/oder 0,5 bis 20 Gew.% Wismut, Rest, jedoch mehr als 50 Gew.% Zinn und/oder Blei als Weichlote in Form von Formteilen oder Pasten zum Aufbringen von Halbleitern auf metallische Träger oder zum Löten oberflächenmontierter Bauelemente auf Leiterplatten und Keramik-Substrate.

## EINSCHLÄGIGE DOKUMENTE

EP 88113299.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 87, Nr. 20, 14. November 1977, Columbus, Ohio, USA<br><br>ISEDA, TORU et al. "Lead-indium type solders for semiconductors." Seite 581, Spalte 1, Zusammenfassung Nr. 160 756a<br><br>& Japan.Kokai 77-65 149<br><br>-- | 1 | B 23 K 35/26 |
| X | CS - B1 - 249 062 (FRANEK ALEXANDER)<br><br>* Ansprüche 1,2 *<br><br>-- | 1 | |
| A | CHEMICAL ABSTRACTS, Band 82, Nr. 8, 24. Februar 1975, Columbus, Ohio, USA<br><br>BATRAKOV,V.P. et al. "Solder for low-temperature soldering." Seite 250, Spalte 1, Zusammenfassung Nr. 47 041x<br><br>& U.S.S.R. 436-714<br><br>-- | 1 | RECHERCHIERTE SACHGEBIETE (Int. Cl.4)<br><br>B 23 K 35/00 |
| A | CHEMICAL ABSTRACTS, Band 94, Nr. 10, 9. März 1981, Columbus, Ohio, USA<br><br>TOKYO SHIBAURA ELECTRIC CO. LTD. "Lead alloy solders. " Seite 285, Spalte 2, Zusammenfassung Nr. 70 126k<br><br>& Jpn.Kokai Tokkyo Koho JP 80-75 893<br><br>-- | 1 | |

Der vorliegende Recherchenbericht wurde für alle Patentansprüche erstellt.

| Recherchenort | Abschlußdatum der Recherche | Prüfer |
|---|---|---|
| WIEN | 05-12-1988 | HAMMER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

----------

& : Mitglied der gleichen Patentfamilie, übereinstimmendes Dokument

EPA Form 1503 03.82

# EUROPÄISCHER RECHERCHENBERICHT

Europäisches Patentamt

## EINSCHLÄGIGE DOKUMENTE

EP 88113299.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 91, Nr. 14, 1. Oktober 1979, Columbus, Ohio, USA<br><br>ANDREEVA.L.I. et al. "Solder for soldering components of electro-vacuum devices."<br>Seite 222, Spalte 2, Zusammen-fassung Nr. 111 344p<br><br>& U.S.S.R. 664-796<br><br>---- | 1 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| WIEN | 05−12−1988 | HAMMER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03 82